(19) Europäisches Patentamt
European Patent Office
Office européen des brevets

(11) EP 4 276 135 A1

(12) **EUROPEAN PATENT APPLICATION**
published in accordance with Art. 153(4) EPC

(43) Date of publication:
**15.11.2023 Bulletin 2023/46**

(21) Application number: **22899601.3**

(22) Date of filing: **02.09.2022**

(51) International Patent Classification (IPC):
***C08G 64/16*** (2006.01) ***C08G 64/30*** (2006.01)
***C08L 69/00*** (2006.01) ***G02B 1/04*** (2006.01)

(86) International application number:
**PCT/KR2022/013213**

(87) International publication number:
**WO 2023/182597 (28.09.2023 Gazette 2023/39)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **23.03.2022 KR 20220035975**

(71) Applicant: **LG CHEM, LTD.**
**Yeongdeungpo-gu,**
**Seoul 07336 (KR)**

(72) Inventor: **The designation of the inventor has not yet been filed**

(74) Representative: **Hoffmann Eitle**
**Patent- und Rechtsanwälte PartmbB**
**Arabellastraße 30**
**81925 München (DE)**

# (54) POLYCARBONATE RESIN AND METHOD FOR MANUFACTURING SAME

(57) The present application relates to a polycarbonate resin including a unit of Chemical Formula 1, a method for preparing the same, a polycarbonate resin composition including the same, and a molded article including the polycarbonate resin composition.

[Figure 1]

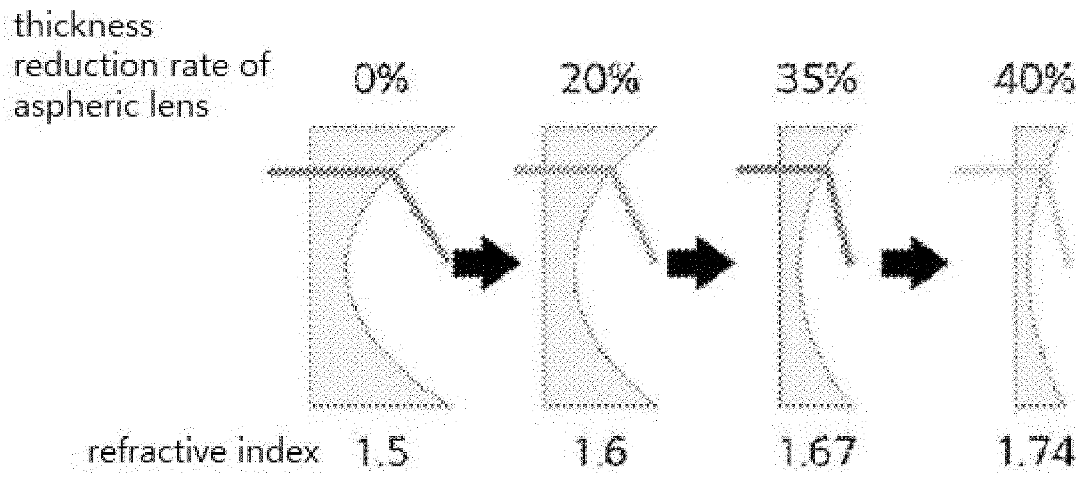


EP 4 276 135 A1

## Description

[Technical Field]

This application claims priority to and the benefit of Korean Patent Application No. 10-2022-0035975 filed in the Korean Intellectual Property Office on March 23, 2022, the entire contents of which are incorporated herein by reference.

The present specification relates to a polycarbonate resin and a preparation method thereof.

[Background Art]

The higher the refractive index of an optical material, the thinner the optical lens required to achieve the same level of correction. Accordingly, as the refractive index of the optical material is increased, a thinner and lighter lens can be manufactured, so that it is possible to make various devices, where lenses are used, smaller.

Generally, when the refractive index of an optical material is increased, there is a problem in that the Abbe's Number becomes low, and for use as an optical material, a certain level or higher of transparency is required.

[Detailed Description of the Invention]

[Technical Problem]

An exemplary embodiment of the present specification has been made in an effort to provide a polycarbonate resin having a novel structure and a preparation method thereof.

Another exemplary embodiment of the present specification has been made in an effort to provide a polycarbonate resin composition including a polycarbonate resin having a novel structure and a molded article prepared from the polycarbonate resin composition.

[Technical Solution]

An exemplary embodiment of the present specification provides a polycarbonate resin including a unit of the following Chemical Formula 1.

[Chemical Formula 1]

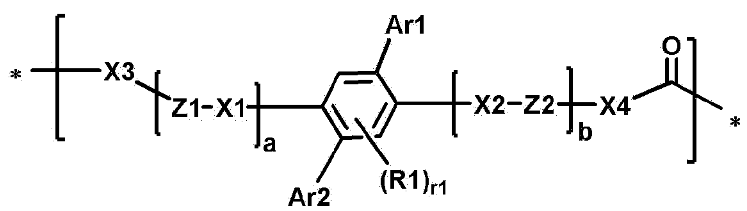

In Chemical Formula 1,

Ar1 and Ar2 are the same as or different from each other, and are each independently a substituted or unsubstituted aryl group; or a substituted or unsubstituted heteroaryl group,
R1 is hydrogen; deuterium; a halogen group; a cyano group; a substituted or unsubstituted alkyl group; a substituted or unsubstituted cycloalkyl group; a substituted or unsubstituted alkoxy group; a substituted or unsubstituted silyl group; a substituted or unsubstituted aryl group; or a substituted or unsubstituted heteroaryl group,
r1 is 1 or 2, and when r1 is 2, two R1's are the same as or different from each other,
X1 to X4 are the same as or different from each other, and are each independently O; or S,
Z1 and Z2 are the same as or different from each other, and are each independently a substituted or unsubstituted alkylene group; or a substituted or unsubstituted cycloalkylene group,
a and b are the same as or different from each other, and are each independently an integer from 1 to 10, and when a and b are each 2 or higher, structures in each parenthesis are the same as or different from each other, and
* means a moiety linked to the main chain of the resin.

An exemplary embodiment of the present invention provides a method for preparing a polycarbonate resin, the method including: polymerizing a composition for preparing the polycarbonate resin, which includes a compound of the following Chemical Formula 1a; and a polycarbonate precursor.

[Chemical Formula 1a]

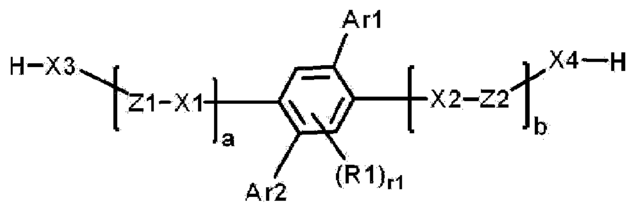

In Chemical Formula 1a,

Ar1 and Ar2 are the same as or different from each other, and are each independently a substituted or unsubstituted aryl group; or a substituted or unsubstituted heteroaryl group,
R1 is hydrogen; deuterium; a halogen group; a cyano group; a substituted or unsubstituted alkyl group; a substituted or unsubstituted cycloalkyl group; a substituted or unsubstituted alkoxy group; a substituted or unsubstituted silyl group; a substituted or unsubstituted aryl group; or a substituted or unsubstituted heteroaryl group,
r1 is 1 or 2, and when r1 is 2, two R1's are the same as or different from each other,
X1 to X4 are the same as or different from each other, and are each independently O; or S,
Z1 and Z2 are the same as or different from each other, and are each independently a substituted or unsubstituted alkylene group; or a substituted or unsubstituted cycloalkylene group, and
a and b are the same as or different from each other, and are each independently an integer from 1 to 10, and when a and b are each 2 or higher, structures in each parenthesis are the same as or different from each other.

Another exemplary embodiment of the present specification provides a polycarbonate resin composition including the polycarbonate resin according to the above-described exemplary embodiment.
Still another exemplary embodiment of the present specification provides a molded article including the polycarbonate resin composition including the polycarbonate resin according to the above-described exemplary embodiment.

[Advantageous Effects]

The polycarbonate resin according to the exemplary embodiments of the present specification has a high refractive index and high transparency.
By using the polycarbonate resin according to the exemplary embodiments of the present specification, an excellent optical lens, optical film, optical thin film, or optical resin having a small thickness can be obtained.

[Brief Description of Drawings]

FIG. 1 is a view illustrating the reduction rate of lens thickness depending on the difference in refractive index.

[Best Mode]

Hereinafter, the present specification will be described in more detail.
For a polycarbonate resin including the unit of Chemical Formula 1 according to an exemplary embodiment of the present specification, from the relationship formula between the molecular structure and the refractive index, which is known by the Lorentz-Lorenz's formula, it can be seen that the refractive index of a material composed of molecules is increased by increasing the electron density of the molecule and reducing the molecular volume. Further, since the core structure of Chemical Formula 1 is a phenylene group, the molecular volume is small and the ability to pack is excellent, and thus, the refractive index of the resin may be improved. Further, when Ar1 and Ar2 are a substituent rich in electrons such as a substituted or unsubstituted aryl group; or a substituted or unsubstituted heteroaryl group, the refractive index of the resin may be further improved by increasing the electron density of the structure represented by Chemical Formula 1. Therefore, the polycarbonate resin according to an exemplary embodiment of the present specification has a high refractive index and high transparency, and an optical lens, an optical film, or an optical resin using

the polycarbonate resin has a small thickness and may exhibit excellent optical characteristics.

Throughout the specification of the present application, the term "combination thereof" included in the Markush type expression means a mixture or combination of one or more selected from the group consisting of constituent elements described in the Markush type expression, and means including one or more selected from the group consisting of the above-described constituent elements.

Examples of the substituents in the present specification will be described below, but are not limited thereto.

In the present specification,

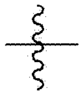

means a moiety to be linked.

In the present specification, the term "substitution" means that a hydrogen atom bonded to a carbon atom of a compound is changed into another substituent, and a position to be substituted is not limited as long as the position is a position at which the hydrogen atom is substituted, that is, a position at which the substituent may be substituted, and when two or more are substituted, the two or more substituents may be the same as or different from each other.

In the present specification, the term "substituted or unsubstituted" means being substituted with one or more substituents selected from the group consisting of deuterium; a halogen group; a hydroxyl group; a cyano group; an alkyl group; a cycloalkyl group; an alkoxy group; an alkenyl group; an aryloxy group; an arylthio group; alkylthio group; a silyl group; an aryl group; a condensed ring group of an aromatic hydrocarbon ring and an aliphatic hydrocarbon ring; and a heteroaryl group, being substituted with a substituent to which two or more substituents among the exemplified substituents are linked, or having no substituent.

In the present specification, the fact that two or more substituents are linked indicates that hydrogen of any one substituent is linked to another substituent. For example, when two substituents are linked to each other, a phenyl group and a naphthyl group may be linked to each other to become a substituent of

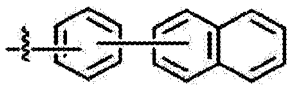

or

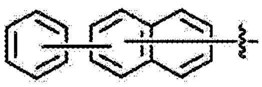

.

Further, the case where three substituents are linked to one another includes not only a case where (Substituent 1)-(Substituent 2)-(Substituent 3) are consecutively linked to one another, but also a case where (Substituent 2) and (Substituent 3) are linked to (Substituent 1). For example, a phenyl group, a naphthyl group , and an isopropyl group may be linked to one another to form a substituent of

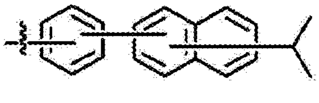

,

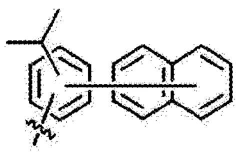

,

or

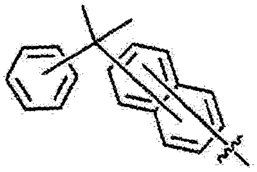

.

The above-described definition also applies equally to the case where four or more substituents are linked to one another.

In the present specification, examples of the halogen group include fluorine, chlorine, bromine or iodine.

In the present specification, the alkyl group may be straight-chained or branched, and the number of carbon atoms thereof is not particularly limited, but is preferably 1 to 30. Specific examples thereof include a methyl group, an ethyl group, a propyl group, an n-propyl group, an isopropyl group, a butyl group, an n-butyl group, an isobutyl group, a tert-butyl group, a sec-butyl group, a 1-methyl-butyl group, a 1-ethyl-butyl group, a pentyl group, an n-pentyl group, an isopentyl group, a neopentyl group, a tert-pentyl group, a hexyl group, an n-hexyl group, a 1-methylpentyl group, a 2-methylpentyl group, a 4-methyl-2-pentyl group, a 3,3-dimethylbutyl group, a 2-ethylbutyl group, a heptyl group, an n-heptyl group, a 1-methylhexyl group, a cyclopentylmethyl group, a cyclohexylmethyl group, an octyl group, an n-octyl group, a tert-octyl group, a 1-methylheptyl group, a 2-ethylhexyl group, a 2-propylpentyl group, an n-nonyl group, a 2,2-dimethylheptyl group, a 1-ethyl-propyl group, a 1,1-dimethyl-propyl group, an isohexyl group, a 2-methylpentyl group, a 4-methylhexyl group, a 5-methylhexyl group, and the like, but are not limited thereto.

In the present specification, the cycloalkyl group is not particularly limited, but has preferably 3 to 30 carbon atoms, and specific examples thereof include a cyclopropyl group, a cyclobutyl group, a cyclopentyl group, a 3-methylcyclopentyl group, a 2,3-dimethylcyclopentyl group, a cyclohexyl group, a 3-methylcyclohexyl group, a 4-methylcyclohexyl group, a 2,3-dimethylcyclohexyl group, a 3,4,5-trimethylcyclohexyl group, a 4-tert-butylcyclohexyl group, a cycloheptyl group, a cyclooctyl group, an adamantyl group, and the like, but are not limited thereto.

In the present specification, the alkoxy group may be straight-chained, branched, or cyclic. The number of carbon atoms of the alkoxy group is not particularly limited, but is preferably 1 to 30. Specific examples thereof include a methoxy group, an ethoxy group, an n-propoxy group, an isopropoxy group, an n-butoxy group, an isobutoxy group, a tert-butoxy group, a sec-butoxy group, an n-pentyloxy group, an neopentyloxy group, an isopentyloxy group, an n-hexyloxy group, a 3,3-dimethylbutyloxy group, a 2-ethylbutyloxy group, an n-octyloxy group, an n-nonyloxy group, an n-decyloxy group, a benzyloxy group, a p-methylbenzyloxy group, and the like, but are not limited thereto.

In the present specification, the alkenyl group may be straight-chained or branched, and the number of carbon atoms thereof is not particularly limited, but is preferably 2 to 30. Specific examples thereof include a vinyl group, a 1-propenyl group, an isopropenyl group, a 1-butenyl group, a 2-butenyl group, a 3-butenyl group, a 1-pentenyl group, a 2-pentenyl group, a 3-pentenyl group, a 3-methyl-1-butenyl group, a 1,3-butadienyl group, an allyl group, a 1-phenylvinyl-1-yl group, a 2-phenylvinyl-1-yl group, a 2,2-diphenylvinyl-1-yl group, a 2-phenyl-2-(naphthyl-1-yl)vinyl-1-yl group, a 2,2-bis(diphenyl-1-yl)vinyl-1-yl group, a stilbenyl group, a styrenyl group, and the like, but are not limited thereto.

In the present specification, an aryl group is not particularly limited, but has preferably 6 to 50 carbon atoms, and the aryl group may be monocyclic or polycyclic.

When the aryl group is a monocyclic aryl group, the number of carbon atoms thereof is not particularly limited, but is preferably 6 to 30. Specific examples of the monocyclic aryl group include a phenyl group, a biphenyl group, a terphenyl group, and the like, but are not limited thereto.

When the aryl group is a polycyclic aryl group, the number of carbon atoms thereof is not particularly limited, but is preferably 10 to 50. Specific examples of the polycyclic aryl group include a naphthyl group, an anthracene group, a phenanthrene group, a triphenylene group, a pyrene group, a phenalene group, a perylene group, a chrysene group, a fluorene group, and the like, but are not limited thereto.

In the present specification, the fluorene group may be substituted, and adjacent groups may be bonded to each other to form a ring.

Examples of the case where the fluorene group is substituted include

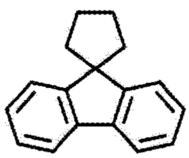 , 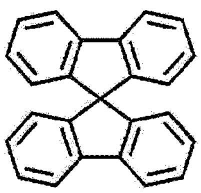 ,

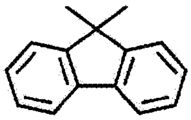

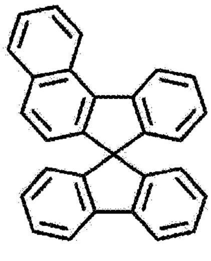,

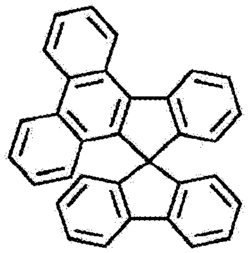,

,

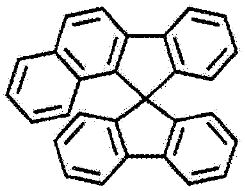

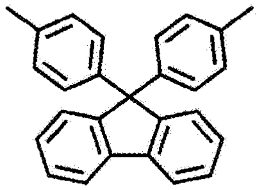,

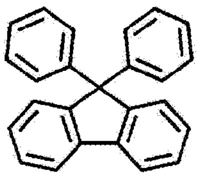,

,

and the like, but are not limited thereto.

In the present specification, the "adjacent" group may mean a substituent substituted with an atom directly linked to an atom in which the corresponding substituent is substituted, a substituent disposed to be sterically closest to the corresponding substituent, or another substituent substituted with an atom in which the corresponding substituent is substituted. For example, two substituents substituted at the ortho position in a benzene ring and two substituents substituted with the same carbon in an aliphatic ring may be interpreted as groups which are "adjacent" to each other.

In the present specification, the heteroaryl group includes one or more atoms other than carbon, that is, one or more heteroatoms, and specifically, the heteroatom may include one or more atoms selected from the group consisting of O, N, Se, S, and the like. The number of carbon atoms thereof is not particularly limited, but is preferably 2 to 30, and the heteroaryl group may be monocyclic or polycyclic. Examples of the heteroaryl group include a thiophene group, a furan group, a pyrrole group, an imidazole group, a thiazole group, an oxazole group, an oxadiazole group, a pyridine group, a bipyridine group, a pyrimidine group, a triazine group, a triazole group, an acridine group, a pyridazine group, a pyrazine group, a quinoline group, a quinazoline group, a quinoxaline group, a phthalazine group, a pyridopyrimidine group, a pyridopyrazine group, a pyrazinopyrazine group, an isoquinoline group, an indole group, a carbazole group, a benzoxazole group, a benzimidazole group, a benzothiazole group, a benzocarbazole group, a benzothiophene group, a dibenzothiophene group, a benzofuran group, a phenanthridine group, a phenanthroline group, an isoxazole group, a thiadiazole group, a dibenzofuran group, a dibenzosilole group, a phenoxathiin group, a phenoxazine group, a phenothiazine group, a dihydroindenocarbazole group, a spirofluorenexanthene group, a spirofluorenethioxanthene group, a tetrahydronaphthothiophene group, a tetrahydronaphthofuran group, a tetrahydrobenzothiophene group, a tetrahydrobenzofuran group, and the like, but are not limited thereto.

In the present specification, the silyl group may be an alkylsilyl group, an arylsilyl group, an alkylarylsilyl group, a heteroarylsilyl group, and the like. The above-described examples of the alkyl group may be applied to the alkyl group in the alkylsilyl group, the above-described examples of the aryl group may be applied to the aryl group in the arylsilyl group, the examples of the alkyl group and the aryl group may be applied to the alkyl group and the aryl group in the alkylarylsilyl group, and the examples of the heterocyclic group may be applied to the heteroaryl group in the heteroarylsilyl group.

In the present specification, the hydrocarbon ring group may be an aromatic hydrocarbon ring group, an aliphatic hydrocarbon ring group, or a condensed ring group of an aromatic hydrocarbon ring and an aliphatic hydrocarbon ring and may be selected among examples of the cycloalkyl group, the aryl group, and a combination thereof, and examples of the hydrocarbon ring group include a phenyl group, a cyclohexyl group, an adamantyl group, a bicyclo[2.2.1]heptyl group, a bicyclo[2.2.1]octyl group, a tetrahydronaphthalene group, a tetrahydroanthracene group, a 1,2,3,4-tetrahydro-1,4-methanonaphthalene group, a 1,2,3,4-tetrahydro-1,4-ethanonaphthalene group, a spirocyclopentanefluorene group, a spiroadamantanefluorene group, a spirocyclohexanefluorene group, and the like, but are not limited thereto.

In the present specification, the aryloxy group may be represented by -ORo, and the description on the above-described aryl group is applied to Ro.

In the present specification, the arylthio group may be represented by -SRs1, and the description on the above-described aryl group is applied to Rs1.

In the present specification, the alkylthio group may be represented by -SRs2, and the description on the above-described alkyl group is applied to Rs2.

In the present specification, an alkylene group means a group having two bonding positions in an alkyl group, that is, a divalent group. The above-described description on the alkyl group may be applied to the alkylene group, except for a divalent alkylene group.

In the present specification, the cycloalkylene group means a group having two bonding positions in a cycloalkyl group, that is, a divalent group. The above-described description on the cycloalkyl group may be applied to the cycloalkylene groups, except for a divalent cycloalkylene group.

In the present specification, a condensed ring group of a divalent aromatic hydrocarbon ring and an aliphatic hydrocarbon ring means a group having two bonding positions in the condensed ring group of the aromatic hydrocarbon ring and the aliphatic hydrocarbon ring, that is, a divalent group. The above-described description on the condensed ring group of the aromatic hydrocarbon ring and the aliphatic hydrocarbon ring may be applied, except that the groups are each a divalent group.

In the present specification, an arylene group means a group having two bonding positions in an aryl group, that is, a divalent group. The above-described description on the aryl group may be applied to the arylene group, except for a divalent arylene group.

According to an exemplary embodiment of the present specification, the polycarbonate resin further includes a unit of the following Chemical Formula 2.

[Chemical Formula 2]

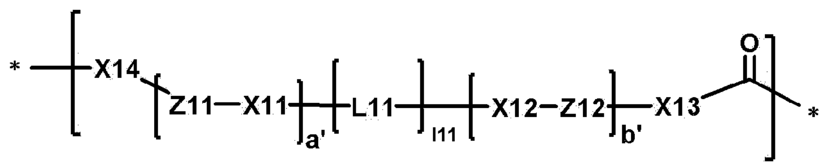

In Chemical Formula 2,

L11 is a substituted or unsubstituted alkylene group; a substituted or unsubstituted cycloalkylene group; a condensed ring group of a divalent aromatic hydrocarbon ring and an aliphatic hydrocarbon ring, which is substituted or unsubstituted; or a substituted or unsubstituted arylene group,

111 is an integer from 1 to 5, and when 111 is 2 or higher, two or more L11's are the same as or different from each other,

X11 to X14 are the same as or different from each other, and are each independently O; or S,

Z11 and Z12 are the same as or different from each other, and are each independently a substituted or unsubstituted alkylene group; or a substituted or unsubstituted cycloalkylene group,

a' and b' are the same as or different from each other, and are each independently an integer from 0 to 10, and when a' and b' are each 2 or higher, structures in each parenthesis are the same as or different from each other, and

* means a moiety linked to the main chain of the resin.

By further including the unit represented by Chemical Formula 2, the polycarbonate resin may supplement the glass transition temperature (Tg) of the unit of Chemical Formula 1 or make the chain behavior of the unit of Chemical Formula 1 flexible, and has a technical effect advantageous for the injection processing of a molded article.

An exemplary embodiment of the present specification provides a polycarbonate resin including the unit of Chemical Formula 1; and the unit of Chemical Formula 2.

According to an exemplary embodiment of the present specification, Ar1 and Ar2 are the same as or different from each other, and are each independently a monocyclic or polycyclic aryl group having 6 to 30 carbon atoms, which is unsubstituted or substituted with a monocyclic or polycyclic aryl group having 6 to 30 carbon atoms or a monocyclic or polycyclic heteroaryl group having 2 to 30 carbon atoms; or a monocyclic or polycyclic heteroaryl group having 2 to 30 carbon atoms, which is unsubstituted or substituted with a monocyclic or polycyclic aryl group having 6 to 30 carbon atoms, R1 is hydrogen, X1 to X4 are O, and Z1 and Z2 are the same as or different from each other, and are each independently a straight-chained or branched alkylene group having 1 to 30 carbon atoms.

According to an exemplary embodiment of the present specification, Ar1 and Ar2 are the same as or different from each other, and are each independently a monocyclic or polycyclic aryl group having 6 to 30 carbon atoms.

According to an exemplary embodiment of the present specification, Ar1 and Ar2 are the same as or different from each other, and are each independently a monocyclic or polycyclic aryl group having 6 to 20 carbon atoms.

According to an exemplary embodiment of the present specification, Ar1 and Ar2 are the same as or different

from each other, and are each independently a polycyclic aryl group having 10 to 30 carbon atoms.

According to an exemplary embodiment of the present specification, Ar1 and Ar2 are the same as or different from each other, and are each independently a polycyclic aryl group having 10 to 20 carbon atoms.

According to an exemplary embodiment of the present specification, Ar1 and Ar2 are a naphthyl group.

According to an exemplary embodiment of the present specification, R1 is hydrogen.

According to an exemplary embodiment of the present specification, X1 is O.

According to an exemplary embodiment of the present specification, X2 is O.

According to an exemplary embodiment of the present specification, X3 is O.

According to an exemplary embodiment of the present specification, X4 is O.

According to an exemplary embodiment of the present specification, Z1 and Z2 are the same as or different from each other, and are each independently a straight-chained or branched alkylene group having 1 to 30 carbon atoms.

According to an exemplary embodiment of the present specification, Z1 and Z2 are the same as or different from each other, and are each independently a straight-chained or branched alkylene group having 1 to 20 carbon atoms.

According to an exemplary embodiment of the present specification, Z1 and Z2 are the same as or different from each other, and are each independently an ethylene group; or an isopropylene group.

According to an exemplary embodiment of the present specification, a is 1.

According to an exemplary embodiment of the present specification, b is 1.

According to an exemplary embodiment of the present specification, a is 0.

According to an exemplary embodiment of the present specification, b is 0.

According to an exemplary embodiment of the present specification, L11 is a monocyclic or polycyclic alkylene group having 1 to 30 carbon atoms; a condensed ring group of a divalent monocyclic or polycyclic aromatic hydrocarbon ring having 6 to 30 carbon atoms and an aliphatic hydrocarbon ring having 3 to 30 carbon atoms; or a monocyclic or polycyclic arylene group having 6 to 50 carbon atoms, which is unsubstituted with or substituted with a straight-chained or branched alkyl group having 1 to 30 carbon atoms or a monocyclic or polycyclic aryl group having 6 to 30 carbon atoms.

According to an exemplary embodiment of the present specification, L11 is a monocyclic or polycyclic alkylene group having 1 to 20 carbon atoms; a condensed ring group of a divalent monocyclic or polycyclic aromatic hydrocarbon ring having 6 to 20 carbon atoms and an aliphatic hydrocarbon ring having 3 to 20 carbon atoms; or a monocyclic or polycyclic arylene group having 6 to 30 carbon atoms, which is unsubstituted with or substituted with a straight-chained or branched alkyl group having 1 to 20 carbon atoms or a monocyclic or polycyclic aryl group having 6 to 20 carbon atoms.

According to an exemplary embodiment of the present specification, L11 is a methylene group which is unsubstituted or substituted with a methyl group; an isopropylene group; a phenylene group which is unsubstituted or substituted with a methyl group or a phenyl group; a divalent naphthalene group; or a divalent fluorene group.

According to an exemplary embodiment of the present specification, 111 is 1.

According to an exemplary embodiment of the present specification, 111 is 2, and two L11's are the same as or different from each other.

According to an exemplary embodiment of the present specification, 111 is 3, and three L11's are the same as or different from each other.

According to an exemplary embodiment of the present specification, X11 is O.

According to an exemplary embodiment of the present specification, X12 is O.

According to an exemplary embodiment of the present specification, X13 is O.

According to an exemplary embodiment of the present specification, X14 is O.

According to an exemplary embodiment of the present specification, Z11 and Z12 are the same as or different from each other, and are each independently a straight-chained or branched alkylene group having 1 to 30 carbon atoms.

According to an exemplary embodiment of the present specification, Z11 and Z12 are the same as or different from each other, and are each independently a straight-chained or branched alkylene group having 1 to 20 carbon atoms.

According to an exemplary embodiment of the present specification, Z11 and Z12 are an ethylene group.

According to an exemplary embodiment of the present specification, a' is 1.

According to an exemplary embodiment of the present specification, b' is 1.

According to an exemplary embodiment of the present specification, a' is 0.

According to an exemplary embodiment of the present specification, b' is 0.

According to an exemplary embodiment of the present specification, the polycarbonate resin may have -OH; -SH; - $CO_2CH_3$; -Cl; or $-OC_6H_5$ as both end groups.

In an exemplary embodiment of the present specification, the polycarbonate resin has a weight average molecular weight of 5,000 g/mol to 500,000 g/mol, preferably 7,000 g/mol to 400,000 g/mol, 8,000 g/mol to 300,000 g/mol, 9,000 g/mol to 200,000 g/mol. The polycarbonate resin has a weight average molecular weight of more preferably 10,000 g/mol to 100,000 g/mol, 10,000 g/mol to 80,000 g/mol, 15,000 g/mol to 70,000 g/mol, 18,000 g/mol to 65,000g/mol.

In an exemplary embodiment of the present invention, the polycarbonate resin has a number average molecular weight of 2,000 g/mol to 250,000 g/mol, 3,000 g/mol to 200,000 g/mol, 4,000 g/mol to 180,000 g/mol, 5,000 g/mol to

150,000 g/mol, preferably 8,000 g/mol to 100,000 g/mol. When the polycarbonate resin satisfies the above-described weight average molecular weight range, the polycarbonate resin may have optimum fluidity and processability.

In the present specification, the weight average molecular weights (Mws) of the polycarbonate resin and the oligomer used in the preparation thereof may be measured by gel permeation chromatograph (GPC) using a polystyrene (PS) standard using Agilent 1200 series. Specifically, the weight average molecular weights may be measured using an Agilent 1200 series device using a Polymer Laboratories PLgel MIX-B 300 mm length column, and in this case, the measurement temperature is 40°C, the used solvent is tetrahydrofuran (THF), and the flow rate is 1 mL/min. The sample of the polycarbonate resin or oligomer is each prepared at a concentration of 10 mg/10 mL, and then fed in an amount of 10 μL, and the weight average molecular weight (Mw) value is induced using a calibration curve formed using a polystyrene standard. In this case, nine types of polystyrene standard products with a molecular weight (g/mol) of 2,000 / 10,000 / 30,000 / 70,000 / 200,000 / 700,000 / 2,000,000 / 4,000,000 / 10,000,000 are used.

In an exemplary embodiment of the present specification, the polycarbonate resin may have a glass transition temperature (Tg) of 90°C to 200°C. Alternatively, the glass transition temperature may be 110°C to 190°C. The glass transition temperature may be preferably 100°C to 190°C, 120°C to 170°C, or 130°C to 160°C, and specifically 116°C to 162°C. When the polycarbonate resin satisfies the above glass transition temperature range, the glass transition temperature is easily adjusted when a polycarbonate resin composition is prepared by mixing with a resin having excellent heat resistance and injectability and having a glass transition temperature different from the above-described range, so that the physical properties desired in the present specification may be satisfied.

The glass transition temperature (Tg) may be measured by a differential scanning calorimeter (DSC). Specifically, the glass transition temperature may be measured from a graph obtained by heating 5.5 mg to 8.5 mg of the polycarbonate resin sample to 270°C under a nitrogen atmosphere, and then scanning the resin sample while heating the resin sample at a heating rate of 10°C/min during the second heating after cooling.

In an exemplary embodiment of the present specification, a refractive index of the polycarbonate resin, which is measured at a wavelength of 587 nm, is 1.50 to 1.75. The refractive index may be preferably 1.65 to 1.712, and more preferably 1.660 to 1.696. When the resin satisfies the above refractive index, a thin and light optical lens can be manufactured when the resin is applied to a molded article such as an optical lens.

In an exemplary embodiment of the present specification, the Abbe's Number of the resin, which is measured and calculated at a wavelength of 486, 587, and 656 nm may be 5 to 45. The Abbe's Number may be preferably 10 to 25, and more preferably 14 to 22. The Abbe's Number may be specifically 16.1 to 20.8. When the resin satisfies the above Abbe's Number range, there is an effect that the dispersion is decreased and the sharpness is increased when the resin is applied to a molded product such as an optical lens. The Abbe's Number may specifically be obtained by the following Equation by measuring the refractive index ($n_D$, $n_F$, and $n_C$) at a wavelength of D (587 nm), F (486 nm), and C (656 nm), respectively at 20°C.

$$\text{Abbe's Number} = (n_D - 1)/(n_F - n_C)$$

The refractive index and the Abbe's Number may be measured from a film prepared by applying a solution prepared by dissolving the resin in a solvent to a silicon wafer by spin-coating, and may be measured by obtaining the result value according to the wavelength of light using an ellipsometer at 20°C for the applied film. The solution may be applied by the spin-coating at a rotation speed of 150 rpm to 300 rpm, and the applied film may have a thickness of 5 um to 20 um. The silicon wafer is not particularly limited, and any silicon wafer that can measure the refractive index and the Abbe's Number of the resin composition according to the present specification may be appropriately adopted. The solvent may be dimethylacetamide or 1,2-dichlorobenzene, and the solution may be prepared by dissolving the resin sample in an amount of 10 wt% based on the total weight of the solution.

An exemplary embodiment of the present invention provides a method for preparing a polycarbonate resin, the method including: polymerizing a composition for preparing the polycarbonate resin, which includes a compound of the following Chemical Formula 1a; and a polycarbonate precursor.

[Chemical Formula 1a]

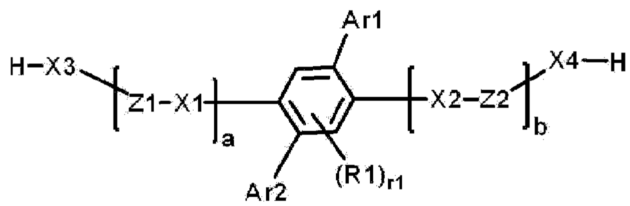

In Chemical Formula 1a,

Ar1 and Ar2 are the same as or different from each other, and are each independently a substituted or unsubstituted aryl group; or a substituted or unsubstituted heteroaryl group,
R1 is hydrogen; or a substituted or unsubstituted alkyl group,
r1 is 1 or 2, and when r1 is 2, two R1's are the same as or different from each other,
X1 to X4 are the same as or different from each other, and are each independently O; or S,
Z1 and Z2 are the same as or different from each other, and are each independently a substituted or unsubstituted alkylene group; or a substituted or unsubstituted cycloalkylene group, and
a and b are the same as or different from each other, and are each independently an integer from 1 to 10, and when a and b are each 2 or higher, structures in each parenthesis are the same as or different from each other.

According to an exemplary embodiment of the present specification, the method for preparing the polycarbonate resin further includes a compound of the following Chemical Formula 2a, and the compound of Chemical Formula 1a and Chemical Formula 2a are included in amounts of 0.01 mole% to 100 mole% : 99.99 mole% to 0 mole%. Specifically, the compounds are included in amounts of 0.01 mole% to 99.99 mole% : 99.99 mole% to 0.01mole%. More specifically, the compounds are included in amounts of 0.1 mole% to 99.9 mole% : 99.9 mole% to 0.1 mole%, 1 mole% to 99 mole% : 99 mole% to 1 mole%, 5 mole% to 95 mole% : 95 mole% to 5 mole%, 10 mole% to 90 mole% : 90 mole% to 10 mole%.

[Chemical Formula 2a]

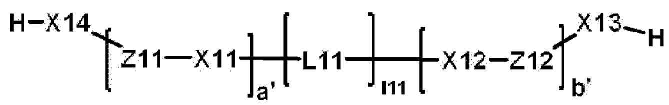

In Chemical Formula 2a,

L11 is a substituted or unsubstituted alkylene group; a substituted or unsubstituted cycloalkylene group; a condensed ring group of a divalent aromatic hydrocarbon ring and an aliphatic hydrocarbon ring, which is substituted or unsubstituted; or a substituted or unsubstituted arylene group,
111 is an integer from 1 to 5, and when 111 is 2 or higher, two or more L11's are the same as or different from each other,
X11 to X14 are the same as or different from each other, and are each independently O; or S,
Z11 and Z12 are the same as or different from each other, and are each independently a substituted or unsubstituted alkylene group; or a substituted or unsubstituted cycloalkylene group, and
a' and b' are the same as or different from each other, and are each independently an integer from 0 to 10, and when a' and b' are each 2 or higher, structures in each parenthesis are the same as or different from each other.

An exemplary embodiment of the present invention provides a method for preparing a polycarbonate resin, the method including: polymerizing a composition for preparing the polycarbonate resin, which includes the compound of Chemical Formula 1a; and a polycarbonate precursor. When the compound of Chemical Formula 1a is included, the compounds are easily polymerized, have a wide range of refractive indices or a high refractive index depending on the substituent, and have a wide range of glass transition temperatures.

An exemplary embodiment of the present invention provides a method for preparing a polycarbonate resin, the method including: polymerizing a composition for preparing the polycarbonate resin, which includes the compound of

Chemical Formula 1a; the compound of Chemical Formula 2a; and a polycarbonate precursor. The compound of Chemical Formula 1a and Chemical Formula 2a are included in amounts of 0.01 mole% to 100 mole% : 99.99 mole% to 0 mole%. Specifically, the compounds are included in amounts of 0.01 mole% to 99.99 mole% : 99.99 mole% to 0.01 mole%. More specifically, the compounds are included in amounts of 0.1 mole% to 99.9 mole% : 99.9 mole% to 0.1 mole%, 1 mole% to 99 mole% : 99 mole% to 1 mole%, 5 mole% to 95 mole% : 95 mole% to 5 mole%, 10 mole% to 90 mole% : 90 mole% to 10 mole%.

When Chemical Formulae 1a and 2a are included in the above contents, the compounds are easily polymerized, have a wide range of refractive indices or a high refractive index depending on the substituent, and have a wide range of glass transition temperatures. Furthermore, the glass transition temperature (Tg) and refractive index can be adjusted, and the chain behavior of the polycarbonate resin can be made flexible, so that there is a technical effect advantageous for the injection processing of a molded article.

The composition for preparing a polycarbonate resin may further include a solvent.

The solvent may be, for example, diphenyl ether, dimethylacetamide or methanol, but is not limited thereto, and any solvent applied in the art may be appropriately adopted.

The solvent may be included in an amount of 5 parts by weight to 60 parts by weight with respect to 100 parts by weight of the composition for preparing a resin.

The solvent may be included in an amount of preferably 5 parts by weight to 50 parts by weight, 7 parts by weight to 45 parts by weight or 8 parts by weight to 40 parts by weight with respect to 100 parts by weight of the composition for preparing a resin.

According to an exemplary embodiment of the present specification, two or more of Chemical Formula 1a may be included. Two or more of Chemical Formula 1a are the same as or different from each other.

In an exemplary embodiment of the present specification, the compound of Chemical Formula 1a may be any one of the following compounds, but is not limited thereto.

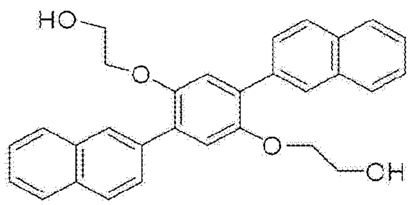 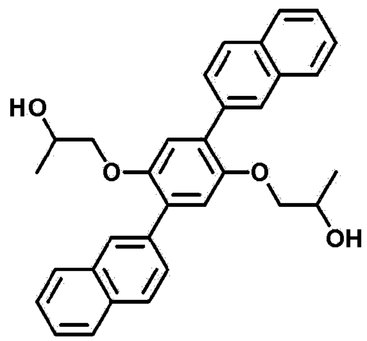

In an exemplary embodiment of the present specification, the compound of Chemical Formula 2a may be any one of the following compounds, but is not limited thereto.

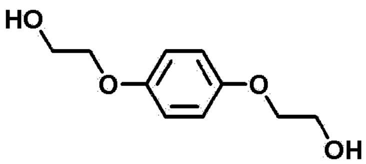 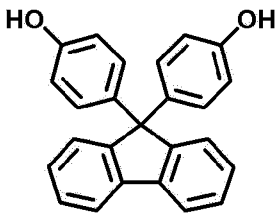 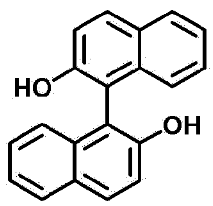

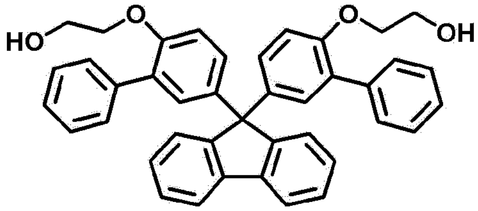 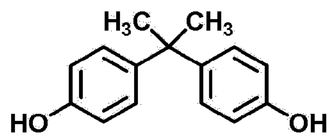

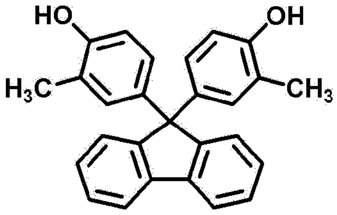
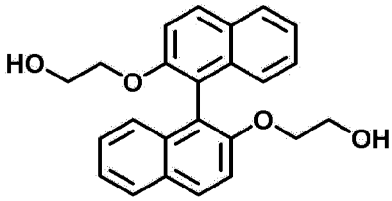

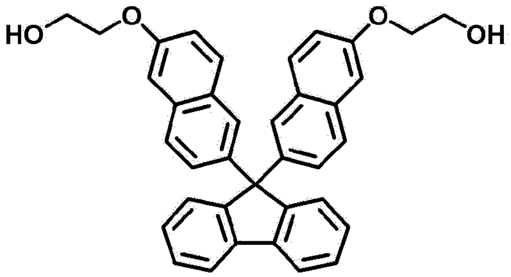
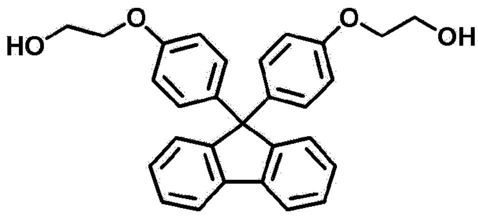

In an exemplary embodiment of the present specification, the compound of Chemical Formula 1a may be included in an amount of 1 part by weight to 100 parts by weight or 1 part by weight to 99 parts by weight with respect to 100 parts by weight of the composition for preparing a polycarbonate resin.

The compound of Chemical Formula 1a may be included in an amount of preferably 1 to 60 parts by weight, 1 to 50 parts by weight, 1 to 40 parts by weight, 1 to 30 parts by weight, 1 to 20 parts by weight or 1 to 10 parts by weight with respect to 100 parts by weight of the composition for preparing a polycarbonate resin.

In an exemplary embodiment of the present specification, the compound of Chemical Formula 2a may be included in an amount of 0 part by weight to 99 parts by weight, or 1 part by weight to 99 parts by weight with respect to 100 parts by weight of the composition for preparing a polycarbonate resin.

The compound of Chemical Formula 2a may be included in an amount of preferably 1 to 60 parts by weight, 1 to 50 parts by weight, 1 to 40 parts by weight, 1 to 30 parts by weight, 1 to 20 parts by weight or 1 to 10 parts by weight with respect to 100 parts by weight of the composition for preparing a polycarbonate resin.

In an exemplary embodiment of the present specification, the polycarbonate precursor may be included in an amount of 1 part by weight to 60 parts by weight with respect to 100 parts by weight of the composition for preparing a polycarbonate resin.

The polycarbonate precursor may be included in an amount of preferably 1 to 60 parts by weight, 1 to 55 parts by weight, 1 to 50 parts by weight, 1 to 45 parts by weight or 1 to 40 parts by weight with respect to 100 parts by weight of the composition for preparing a polycarbonate resin.

According to an exemplary embodiment of the present specification, the polycarbonate precursor is the following Chemical Formula A.

[Chemical Formula A]

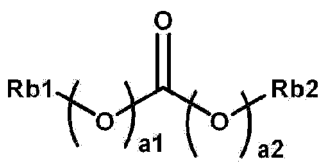

In Chemical Formula A,

Rb1 and Rb2 are the same as or different from each other, and are each independently a halogen group; a substituted or unsubstituted alkyl group; or a substituted or unsubstituted aryl group, and
a1 and a2 are each 0 or 1.

According to an exemplary embodiment of the present specification, Rb1 and Rb2 are the same as or different from each other, and are each independently a halogen group; a substituted or unsubstituted straight-chained or branched alkyl group having 1 to 30 carbon atoms; or a substituted or unsubstituted monocyclic or polycyclic aryl group having 6

to 30 carbon atoms.

According to an exemplary embodiment of the present specification, Rb1 and Rb2 are the same as or different from each other, and are each independently a halogen group; a substituted or unsubstituted straight-chained or branched alkyl group having 1 to 20 carbon atoms; or a substituted or unsubstituted monocyclic or polycyclic aryl group having 6 to 20 carbon atoms.

According to an exemplary embodiment of the present specification, Rb1 and Rb2 are the same as or different from each other, and are each independently a halogen group; a straight-chained or branched alkyl group having 1 to 30 carbon atoms; or a monocyclic or polycyclic aryl group having 6 to 30 carbon atoms.

According to an exemplary embodiment of the present specification, Rb1 and Rb2 are the same as or different from each other, and are each independently a halogen group; a straight-chained or branched alkyl group having 1 to 20 carbon atoms; or a monocyclic or polycyclic aryl group having 6 to 20 carbon atoms.

According to an exemplary embodiment of the present specification, Rb1 and Rb2 are the same as or different from each other, and are each independently -Cl; a methyl group; an ethyl group; an n-propyl group; an isopropyl group; an n-butyl group; or a phenyl group.

According to an exemplary embodiment of the present specification, Chemical Formula A is any one selected from the following compounds.

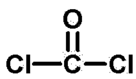
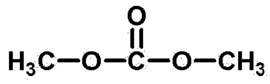
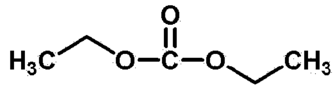

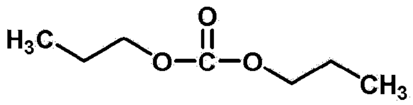
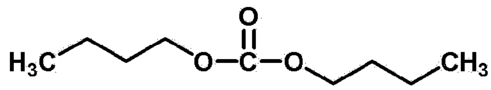

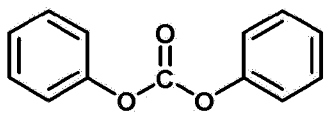
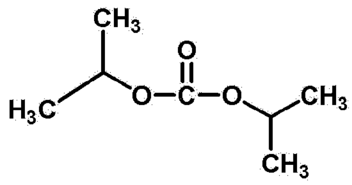

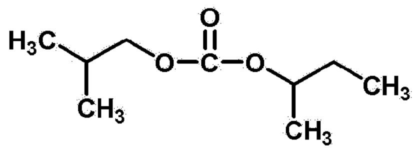

In the case of the polyester resin, the precursor (terephthalate

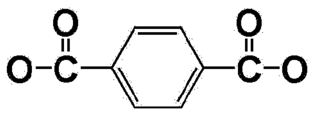

, and the like) has a higher molecular weight than the precursor (carbonate

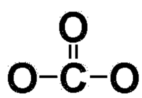

) of the polycarbonate resin, and accounts for a large proportion of the weight of the resin. Since the precursor lowers the concentration of a diol monomer which implements a high refractive index, the refractive index of the polycarbonate resin is relatively higher than that of the polyester resin. In addition, the polyester resin has a large length of the conjugated bond due to the structural feature compared to polycarbonate resin, and has a disadvantage in that the yellow index is generally high due to intramolecular hydrogen bonding.

The polycarbonate precursor serves to link an additional comonomer, if necessary, and other specific examples thereof which may be applied in addition to the compound represented by Chemical Formula A include phosgene, triphosgene, diphosgene, bromophosgene, dimethyl carbonate, diethyl carbonate, dibutyl carbonate, dicyclohexyl carbonate, ditolyl carbonate, bis(chlorophenyl) carbonate, m-cresyl carbonate, dinaphthyl carbonate, bis(diphenyl) carbonate, bishaloformate, or the like, and any one of them or a mixture of two or more thereof may be used.

In an exemplary embodiment of the present specification, it is preferred that the polycarbonate resin is polymerized from the compound of Chemical Formula 1a and the polycarbonate precursor of Chemical Formula A.

By polymerizing the compound of Chemical Formula 1a and the polycarbonate precursor of Chemical Formula A, the unit of the above-described Chemical Formula 1 may be formed.

The compound of Chemical Formula 1a may be used in an amount of 1 part by mol to 100 parts by mol, and 1 part by mol to 99 parts by mol with respect to 100 parts by mol of the entire monomer constituting the polycarbonate resin including the unit of Chemical Formula 1.

The polycarbonate precursor of Chemical Formula A may be used in an amount of 1 part by mol to 150 parts by mol, and 50 parts by mol to 150 parts by mol with respect to 100 parts by mol of the entire monomer of the compound of Chemical Formula 1a constituting the resin.

In an exemplary embodiment of the present specification, the polycarbonate resin may further include the unit of Chemical Formula 2.

By polymerizing the compound of Chemical Formula 2a and the polycarbonate precursor of Chemical Formula A, the unit of the above-described Chemical Formula 2 may be formed.

The compound of Chemical Formula 2a may be used in an amount of 0 part by mol to 99 parts by mol, and 1 part by mol to 99 parts by mol with respect to 100 parts by mol of the entire monomer constituting the polycarbonate resin including the unit of Chemical Formula 2.

The polycarbonate precursor of Chemical Formula A may be used in an amount of 1 part by mol to 150 parts by mol, and 50 parts by mol to 150 parts by mol with respect to 100 parts by mol of the entire monomer of the compound of Chemical Formula 2a constituting the resin.

For the polymerization of the resin according to the present specification, methods known in the art may be used.

It is preferred that the polymerization is performed by a melt polycondensation method.

In the melt polycondensation method, a catalyst may be further applied as needed using the composition for preparing a polycarbonate resin, and melt polycondensation may be performed under heating and further under normal pressure or reduced pressure while removing by-products by an ester exchange reaction. As the catalyst, a material generally applied in the art may be adopted.

Specifically, in the melt polycondensation method, it is preferred that the compound of Chemical Formula 1a; and the polycarbonate precursor are melted in a reaction vessel, and then a reaction is performed in a state where a by-product compound is allowed to stay. The preparation method may further include the compound of Chemical Formula 2a.

In order to allow the by-product compound to stay, pressure may be controlled by closing the reaction device, or reducing pressure or increasing pressure.

The reaction time of this process is 20 minutes or more and 600 minutes or less, preferably 40 minutes or more and 450 minutes or less, and more preferably 60 minutes or more and 300 minutes or less.

In this case, when the by-product compound is distilled off immediately after being produced, a resin to be finally obtained has a small content of high molecular weight materials. However, when the by-produced compound is allowed to stay in the reaction vessel for a certain period of time, the finally obtained resin is obtained to have a large content of high molecular weight materials.

The melt polycondensation method may be performed continuously or in a batch manner. The reaction device used for performing the reaction may be a vertical type equipped with an anchor type impeller, a Maxblend impeller, a helical ribbon type impeller or the like, may be a horizontal type equipped with a paddle blade, a lattice blade, a spectacle-shaped blade or the like, and may be an extruder type equipped with a screw. In addition, it is desirable to use a reaction device that appropriately combines these reaction devices in consideration of the viscosity of the polymer.

In the method for preparing a polycarbonate resin used in the present specification, the catalyst may be removed or deactivated in order to maintain heat stability and hydrolysis stability after the completion of the polymerization reaction. A method of deactivating the catalyst by adding a known acidic material in the art may be preferably performed.

As the acidic material, for example, esters such as butyl benzoate, aromatic sulfonic acids such as p-toluenesulfonic acid; aromatic sulfonic acid esters such as butyl p-toluenesulfonate and hexyl p-toluenesulfonate; phosphoric acids such as phosphorous acid, phosphoric acid and phosphonic acid; phosphorous acid esters such as triphenyl phosphite, monophenyl phosphite, diphenyl phosphite, diethyl phosphite, di-n-propyl phosphite, di-n-butyl phosphite, di-n-hexyl phosphite, dioctyl phosphite and monooctyl phosphite; phosphoric acid esters such as triphenyl phosphate, diphenyl phosphate, monophenyl phosphate, dibutyl phosphate, dioctyl phosphate and monooctyl phosphate; phosphonic acids such as diphenylphosphonic acid, dioctylphosphonic acid and dibutylphosphonic acid; phosphonic acid

esters such as diethyl phenylphosphonate; phosphines such as triphenylphosphine and bis(diphenylphosphino)ethane; boric acids such as boric acid and phenylboric acid; aromatic sulfonic acid salts such as dodecylbenzenesulfonic acid tetrabutylphosphonium salts; organic halides such as stearic acid chloride, benzoyl chloride and p-toluenesulfonic acid chloride; alkylsulfuric acids such as dimethylsulfuric acid; organic halides such as benzyl chloride, and the like are preferably used.

The acidic material may be used in an amount of 0.1 parts by mol to 5 parts by mol, preferably 0.1 parts by mol to 1 part by mol with respect to 100 parts by mol of the catalyst.

When the amount of the acidic material is smaller than 0.1 parts by mol, the deactivation effect becomes insufficient, which is not preferred. Further, when the amount exceeds 5 parts by mol, the heat resistance of the resin deteriorates and the molded article is easily colored, which is not preferred.

After the catalyst is deactivated, a process of devolatilizing a low boiling point compound in the resin may be further performed under a pressure of 0.1 mmHg to 1 mmHg and at a temperature of 200°C to 350°C. In this process, a horizontal-type apparatus equipped with a stirring blade having excellent surface renewal ability such as a paddle blade, a lattice blade, and a spectacle-shaped blade, or a thin film evaporator is preferably used.

It is preferred that the content of foreign materials in the resin of the present specification is as small as possible, and filtration of a melting raw material, filtration of a catalyst solution, and the like are preferably performed.

The mesh of the filter used in the filtration is preferably 5 um or less, and more preferably 1 um or less. In addition, filtration of the produced resin using a polymer filter is preferably performed. The mesh of the polymer filter is preferably 100 um or less, and more preferably 30 um or less. Furthermore, a process of obtaining a resin pellet needs to be performed in a low-dust environment, and the environment is preferably Class 6 or lower, and more preferably Class 5 or lower.

Further, examples of a method of molding a molded article including the polycarbonate resin include compression molding, molds, roll processing, extrusion molding, stretching, and the like in addition to injection molding, but are not limited thereto.

Another exemplary embodiment of the present specification provides a polycarbonate resin composition including the resin according to the above-described exemplary embodiments.

In an exemplary embodiment of the present specification, the polycarbonate resin may be included in an amount of 1 part by weight to 80 parts by weight based on 100 parts by weight of the polycarbonate resin composition.

In an exemplary embodiment of the present specification, the polycarbonate resin composition may further include a solvent. The solvent may be, for example, dimethylacetamide or 1,2-dichlorobenzene.

The solvent may be included in an amount of 20 parts by weight to 99 parts by weight based on 100 parts by weight of the polycarbonate resin composition.

The polycarbonate resin composition may further include an additional monomer in addition to the compound of Chemical Formula 1a. The additional monomer is not particularly limited, and a monomer generally applied in the art related to polycarbonate may be appropriately adopted as long as the main physical properties of the polycarbonate resin composition are not changed. The additional monomer may be used in an amount of 1 part by mol to 50 parts by mol with respect to 100 parts by mol of the entire monomer constituting the resin including the unit of Chemical Formula 1.

The polycarbonate resin composition may further include one or more selected from the group consisting of an additive, for example, an antioxidant, a plasticizer, an anti-static agent, a nucleating agent, a flame retardant, a lubricant, an impact modifier, a fluorescent brightener, a UV absorber, a pigment and a dye, if necessary, in addition to a resin including the unit of Chemical Formula 1.

The additive may be included in an amount of 1 part by weight to 99 parts by weight based on 100 parts by weight of the polycarbonate resin composition.

The type of antioxidant, plasticizer, anti-static agent, nucleating agent, flame retardant, lubricant, impact modifier, fluorescent brightener, UV absorber, pigment or dye is not particularly limited, and those applied in the art may be appropriately adopted.

Still another exemplary embodiment of the present specification provides a molded article including the polycarbonate resin composition according to the above-described exemplary embodiments.

In an exemplary embodiment of the present specification, the molded article may be prepared from the polycarbonate resin composition or a cured product thereof.

As an example of a method of preparing the molded article, it is possible to include mixing a resin including the unit of Chemical Formula 1 and the additive well using a mixer, preparing the resulting mixture as a pellet by extrusion molding the mixture using an extruder, drying the pellet, and then injecting the pellet using an injection molding machine.

In an exemplary embodiment of the present specification, the molded article is an optical lens.

In an exemplary embodiment of the present specification, the optical lens has a thickness of 0.1 um to 30 mm.

According to the difference in the refractive index of the optical lens, the position of the focal point where the light is focused varies in the lenses having the same thickness. This is illustrated in FIG. 1. This changes the position of the focal point focused between a camera lens and an image sensor and between the spectacle lens and the human

pupil, and the thickness of the lens and film is reduced as the refractive index is increased to adjust the focal point at the same position. An optical lens according to an exemplary embodiment of the present specification has a high refractive index, and thus may implement an optical lens with a small thickness.

The optical lens is manufactured using the polycarbonate resin, has a small thickness, a high refractive index and high transparency, and may be preferably applied to a camera.

In an exemplary embodiment of the present specification, the molded article is an optical film or optical thin film. The optical film or optical thin film is manufactured using the polycarbonate resin, has a small thickness and excellent light harvesting effect and light diffusion effect, and may be preferably applied to backlight modules, flat lenses, and meta lenses of liquid crystal displays, and the like.

In an exemplary embodiment of the present specification, the optical film or optical thin film has a thickness of 0.1 nm to 10 mm.

In an exemplary embodiment of the present specification, the molded article is an optical resin. The optical resin is manufactured using the polycarbonate resin, and has a low optical loss due to its small thickness, high refractive index and low birefringence.

The optical resin according to an exemplary embodiment of the present specification has a low optical loss due to its high refractive index and low birefringence. The optical resin according to an exemplary embodiment of the present specification has a glass transition temperature of 90°C to 200°C, which is not very high or low in heat resistance characteristics compared to general optical materials in the related art, and thus is easily processed and shows excellent heat resistance characteristics. When the glass transition temperature exceeds 200°C, it is difficult to process the optical resin because the melt flow index increases, and when the glass transition temperature is less than 90°C, the low heat resistance characteristics result in poor weatherability due to the external environment. Accordingly, there are few optical resins according to an exemplary embodiment of the present specification, which have suitable thermal properties and implement a high refractive index.

[Mode for Invention]

Hereinafter, the present specification will be exemplified in more detail through Examples.

Preparation Example 1: Preparation of Resin 1

45.053 g (0.100 mol) of Monomer 1-1 and 21.422 g (0.100 mol) of diphenylcarbonate were melted and reacted at 250°C for 5 hours. As the reaction proceeded, phenol was generated as a by-product, and the degree of decompression was adjusted up to 1 Torr to remove the phenol. After completion of the reaction, Resin 1, which is a polymerized polymer molten resin, was obtained by blowing nitrogen into the reactor to create a normal pressure atmosphere.

Monomer 1-1:

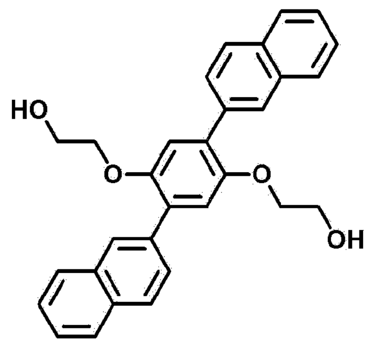

Preparation Examples 2 to 22 Preparation of Resins 2 to 22

Resins 2 to 22 were obtained by preparation in the same manner as in Preparation Example 1, except that the monomers in the following Table 1 were used in amounts of the following parts by weight instead of Monomer 1-1 in Preparation Example 1.

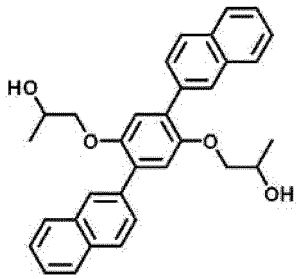

Monomer 1-2

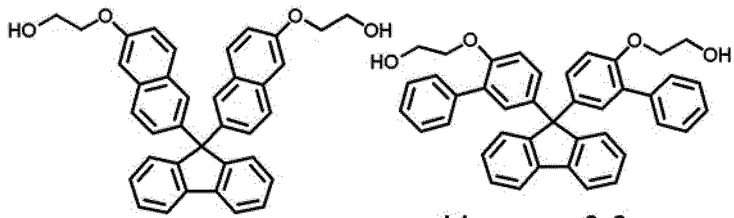

Monomer 2-1

Monomer 2-2

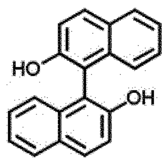

Monomer 2-3

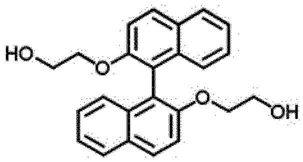

Monomer 2-4

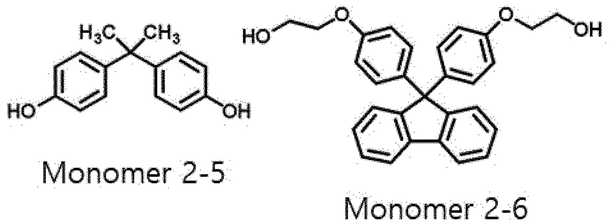

Monomer 2-5

Monomer 2-6

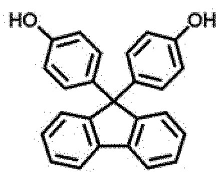

Monomer 2-7

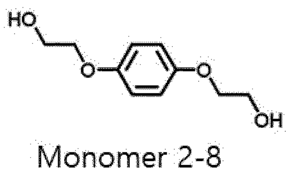

Monomer 2-8

[Table 1]

| No. | Composition (part by mol) of resin | | | | | | | | | |
|---|---|---|---|---|---|---|---|---|---|---|
| | Monomer 1-1 | Monomer 1-2 | Monomer 2-1 | Monomer 2-2 | Monomer 2-3 | Monomer 2-4 | Monomer 2-5 | Monomer 2-6 | Monomer 2-7 | Monome r 2-8 |
| Resin 1 | 100 | | | | | | | | | |
| Resin 2 | 70 | | | 30 | | | | | | |
| Resin 3 | 50 | | | | | | | 50 | | |
| Resin 4 | 30 | | | | | | | 70 | | |
| Resin 5 | 30 | | | 70 | | | | | | |
| Resin 6 | 20 | | 75 | | | | | | | 5 |
| Resin 7 | 20 | | 75 | | 5 | | | | | |
| Resin 8 | 20 | | | | | 50 | | | 30 | |
| Resin 9 | 5 | 5 | 53 | | | 37 | | | | |
| Resin 10 | 5 | | | 40 | | 55 | | | | |
| Resin 11 | 5 | | | 35 | | 60 | | | | |
| Resin 12 | 5 | | 45 | | | 50 | | | | |
| Resin 13 | 1 | | 50 | | | 49 | | | | |
| Resin 14 | 1 | | 29 | 20 | | 50 | | | | |
| Resin 15 | 1 | | 30 | 37 | | 32 | | | | |
| Resin 16 | 1 | | 27 | 29 | | 43 | | | | |
| Resin 17 | 1 | | 35 | | | 58 | 6 | | | |
| Resin 18 | 1 | | 34 | | | 57 | 8 | | | |
| Resin 19 | 1 | | 30 | 35 | | 34 | | | | |
| Resin 20 | 1 | | 35 | | | 26 | | 38 | | |
| Resin 21 | 1 | | 30 | | | 62 | 7 | | | |
| Resin 22 | 1 | | 29 | 33 | | 37 | | | | |

Experimental Example.

The molecular weight and molecular weight distribution of the polymerized resin sample were confirmed through gel permeation chromatography (GPC), and a thermogram was obtained using a differential scanning calorimeter (DSC) to investigate the thermal characteristics. After a film was formed to measure the refractive index and the Abbe's Number, a result value according to the wavelength of light was obtained using an ellipsometer.

For the molecular weight through gel permeation chromatography (GPC), results were obtained by injecting a solution produced using tetrahydrofuran (THF, stabilized with butylated hydroxytoluene (BHT)) as a solvent, dissolving the resin sample in tetrahydrofuran at a concentration of 1.0 mg/1 ml, filtering the dissolved resin sample with a syringe filter, and measuring the molecular weight at 40°C, and the results are shown in the following Table 2. A Waters RI detector was used, and two Agilent PLgel MIXED-B columns were used.

A differential scanning calorimeter (DSC) was measured to determine the glass transition temperature (Tg) of the resin. A glass transition temperature (Tg) was obtained on a graph obtained by heating a 5.5 mg to 8.5 mg of the resin sample to 270°C under $N_2$ flow, cooling the resin sample, and then scanning the resin sample while heating the resin sample at a heating rate of 10°C/min during the second heating, and the glass transition temperature (Tg) is shown in the following Table 2.

In order to measure the refractive index and Abbe's Number of the resin, a polymer solution prepared by dissolving a resin powder sample obtained by polymerization in a solvent dimethylacetamide in an amount of 10 wt% based on the total weight of the polymer solution was applied onto a silicon wafer at a rotation speed of 220 rpm by spin coating to form a film having a thickness of 20 μm, and then the resulting values according to the wavelength of light were obtained at 20°C using an ellipsometer, and are shown in the following Table 2. Specifically, the refractive index was measured at a wavelength of 589 nm, and for the Abbe's Number, an Abbe's Number was obtained by the following Equation by measuring the refractive index ($n_D$, $n_F$, and $n_C$) at a wavelength of D (587 nm), F (486 nm), and C (656 nm), respectively.

$$\text{Abbe's Number} = (n_D-1)/(n_F - n_C)$$

[Table 2]

| No. | Mn (g/mol) | Mw (g/mol) | PDI | RI (587nm) | Tg (°C) | Abbe's Number |
|---|---|---|---|---|---|---|
| Resin 1 | 46700 | 82000 | 1.76 | 1.696 | 116 | 16.1 |
| Resin 2 | 37600 | 60300 | 1.60 | 1.689 | 132 | 16.5 |
| Resin 3 | 14000 | 24000 | 1.71 | 1.658 | 135 | 20.8 |
| Resin 4 | 21000 | 36000 | 1.73 | 1.660 | 138 | 20.3 |
| Resin 5 | 29000 | 48000 | 1.66 | 1.677 | 134 | 17.8 |
| Resin 6 | 16000 | 29000 | 1.81 | 1.686 | 155 | 16.8 |
| Resin 7 | 15000 | 29000 | 1.93 | 1.686 | 162 | 16.2 |
| Resin 8 | 18000 | 32000 | 1.78 | 1.670 | 141 | 18.5 |
| Resin 9 | 16000 | 28000 | 1.75 | 1.682 | 142 | 16.9 |
| Resin 10 | 19000 | 33000 | 1.74 | 1.663 | 131 | 20.1 |
| Resin 11 | 21000 | 34000 | 1.62 | 1.665 | 128 | 19.5 |
| Resin 12 | 15000 | 26000 | 1.73 | 1.678 | 140 | 18.1 |
| Resin 13 | 15000 | 27000 | 1.80 | 1.675 | 146 | 18.6 |
| Resin 14 | 16000 | 27000 | 1.69 | 1.669 | 137 | 19.1 |
| Resin 15 | 16000 | 28000 | 1.75 | 1.668 | 145 | 18.9 |
| Resin 16 | 17000 | 31000 | 1.82 | 1.672 | 141 | 18.1 |
| Resin 17 | 16000 | 26000 | 1.63 | 1.671 | 141 | 18.3 |
| Resin 18 | 17000 | 28000 | 1.65 | 1.673 | 142 | 18.6 |

(continued)

| No. | Mn (g/mol) | Mw (g/mol) | PDI | RI (587nm) | Tg (°C) | Abbe's Number |
|---|---|---|---|---|---|---|
| Resin 19 | 20000 | 33000 | 1.65 | 1.670 | 147 | 19.5 |
| Resin 20 | 19000 | 32000 | 1.68 | 1.669 | 145 | 19.2 |
| Resin 21 | 17000 | 28000 | 1.65 | 1.669 | 139 | 18.9 |
| Resin 22 | 21000 | 37000 | 1.76 | 1.669 | 150 | 19.7 |

In Table 2, Mn means the number average molecular weight, Mw means the weight average molecular weight, PDI means the polydispersity index, RI means the refractive index, Tg means the glass transition temperature, and the refractive index is a value measured at a wavelength of 587 nm.

According to Table 2, the resins according to exemplary embodiments of the present invention include the unit of Chemical Formula 1, and in particular, the core structure of Chemical Formula 1 is a phenylene group, so that there is an advantage in that Tg is low due to the small formula weight, and since Ar1 and Ar2 have substituents rich in electrons, the refractive index of a polycarbonate resin including the substituents is improved due to a high electron density.

Furthermore, since the unit of Chemical Formula 2 is further included in the unit of Chemical Formula 1, the glass transition temperature (Tg) and refractive index can be adjusted, and the chain behavior of the polycarbonate resin can be made flexible, so that there is a technical effect advantageous for the injection processing of a molded article.

## Claims

**1.** A polycarbonate resin comprising a unit of the following Chemical Formula 1:

[Chemical Formula 1]

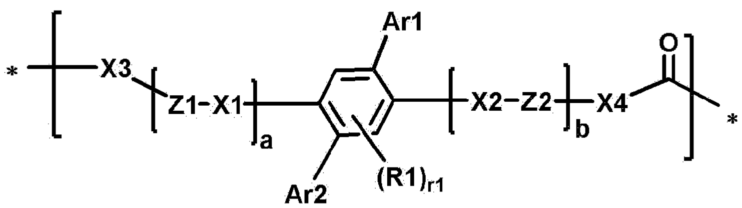

wherein, in Chemical Formula 1,

Ar1 and Ar2 are the same as or different from each other, and are each independently a substituted or unsubstituted aryl group; or a substituted or unsubstituted heteroaryl group,
R1 is hydrogen; deuterium; a halogen group; a cyano group; a substituted or unsubstituted alkyl group; a substituted or unsubstituted cycloalkyl group; a substituted or unsubstituted alkoxy group; a substituted or unsubstituted silyl group; a substituted or unsubstituted aryl group; or a substituted or unsubstituted heteroaryl group,
r1 is 1 or 2, and when r1 is 2, two R1's are the same as or different from each other,
X1 to X4 are the same as or different from each other, and are each independently O; or S,
Z1 and Z2 are the same as or different from each other, and are each independently a substituted or unsubstituted alkylene group; or a substituted or unsubstituted cycloalkylene group,
a and b are the same as or different from each other, and are each independently an integer from 1 to 10, and when a and b are each 2 or higher, structures in each parenthesis are the same as or different from each other, and
* means a moiety linked to the main chain of the resin.

**2.** The polycarbonate resin of claim 1, further comprising a unit of the following Chemical Formula 2:

[Chemical Formula 2]

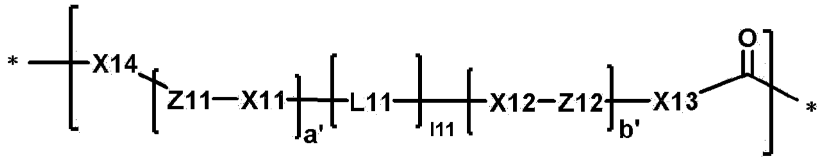

wherein, in Chemical Formula 2,

L11 is a substituted or unsubstituted alkylene group; a substituted or unsubstituted cycloalkylene group; a condensed ring group of a divalent aromatic hydrocarbon ring and an aliphatic hydrocarbon ring, which is substituted or unsubstituted; or a substituted or unsubstituted arylene group,
111 is an integer from 1 to 5, and when 111 is 2 or higher, two or more L11's are the same as or different from each other,
X11 to X14 are the same as or different from each other, and are each independently O; or S,
Z11 and Z12 are the same as or different from each other, and are each independently a substituted or unsubstituted alkylene group; or a substituted or unsubstituted cycloalkylene group,
a' and b' are the same as or different from each other, and are each independently an integer from 0 to 10, and when a' and b' are each 2 or higher, structures in each parenthesis are the same as or different from each other, and
* means a moiety linked to the main chain of the resin.

**3.** The polycarbonate resin of claim 1, wherein Ar1 and Ar2 are the same as or different from each other, and are each independently a monocyclic or polycyclic aryl group having 6 to 30 carbon atoms, which is unsubstituted or substituted with a monocyclic or polycyclic aryl group having 6 to 30 carbon atoms or a monocyclic or polycyclic heteroaryl group having 2 to 30 carbon atoms; or a monocyclic or polycyclic heteroaryl group having 2 to 30 carbon atoms, which is unsubstituted or substituted with a monocyclic or polycyclic aryl group having 6 to 30 carbon atoms,

R1 is hydrogen,
X1 to X4 are O, and
Z1 and Z2 are the same as or different from each other, and are each independently a straight-chained or branched alkylene group having 1 to 30 carbon atoms.

**4.** The polycarbonate resin of claim 1, wherein the polycarbonate resin has a weight average molecular weight (Mw) of 5,000 g/mol to 500,000 g/mol.

**5.** The polycarbonate resin of claim 1, wherein a refractive index of the polycarbonate resin, which is measured at a wavelength of 587 nm, is 1.50 to 1.75.

**6.** The polycarbonate resin of claim 1, wherein the polycarbonate resin has a glass transition temperature (Tg) of 90°C to 200°C.

**7.** The polycarbonate resin of claim 1, wherein the Abbe's Number of the polycarbonate resin, which is measured at a wavelength of 486, 587, and 656 nm, is 5 to 45.

**8.** A method for preparing the polycarbonate resin according to any one of claims 1 to 7, the method comprising: polymerizing a composition for preparing a polycarbonate resin comprising a compound of the following Chemical Formula 1a; and

a polycarbonate precursor:

[Chemical Formula 1a]

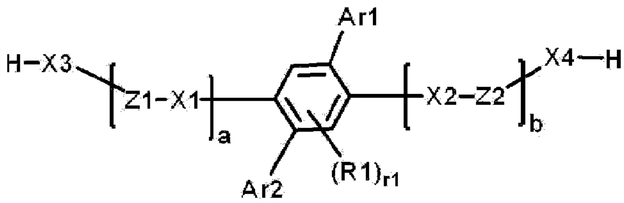

wherein, in Chemical Formula 1a,

Ar1 and Ar2 are the same as or different from each other, and are each independently a substituted or unsubstituted aryl group; or a substituted or unsubstituted heteroaryl group,

R1 is hydrogen; deuterium; a halogen group; a cyano group; a substituted or unsubstituted alkyl group; a substituted or unsubstituted cycloalkyl group; a substituted or unsubstituted alkoxy group; a substituted or unsubstituted silyl group; a substituted or unsubstituted aryl group; or a substituted or unsubstituted heteroaryl group,

r1 is 1 or 2, and when r1 is 2, two R1's are the same as or different from each other,

X1 to X4 are the same as or different from each other, and are each independently O; or S,

Z1 and Z2 are the same as or different from each other, and are each independently a substituted or unsubstituted alkylene group; or a substituted or unsubstituted cycloalkylene group,

a and b are the same as or different from each other, and are each independently an integer from 1 to 10, and when a and b are each 2 or higher, structures in each parenthesis are the same as or different from each other.

**9.** The method of claim 8, wherein the method for preparing the polycarbonate resin further comprises a compound of the following Chemical Formula 2a, and the compound of Chemical Formula 1a and Chemical Formula 2a are comprised in amounts of 0.01 mole% to 100 mole% : 99.99 mole% to 0 mole%:

[Chemical Formula 2a]

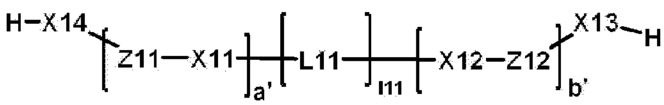

in Chemical Formula 2a,

L11 is a substituted or unsubstituted alkylene group; a substituted or unsubstituted cycloalkylene group; a condensed ring group of a divalent aromatic hydrocarbon ring and an aliphatic hydrocarbon ring, which is substituted or unsubstituted; or a substituted or unsubstituted arylene group,

111 is an integer from 1 to 5, and when 111 is 2 or higher, two or more L11's are the same as or different from each other,

X11 to X14 are the same as or different from each other, and are each independently O; or S,

Z11 and Z12 are the same as or different from each other, and are each independently a substituted or unsubstituted alkylene group; or a substituted or unsubstituted cycloalkylene group,

a' and b' are the same as or different from each other, and are each independently an integer from 0 to 10, and when a' and b' are each 2 or higher, structures in each parenthesis are the same as or different from each other.

**10.** The method of claim 8, wherein the polycarbonate precursor is the following Chemical Formula A:

[Chemical Formula A]

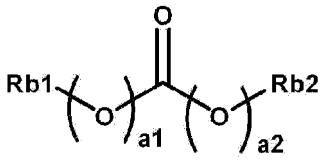

wherein, in Chemical Formula A,

Rb1 and Rb2 are the same as or different from each other, and are each independently a halogen group; a substituted or unsubstituted alkyl group; or a substituted or unsubstituted aryl group, and
a1 and a2 are each 0 or 1.

**11.** A polycarbonate resin composition comprising the polycarbonate resin according to any one of claims 1 to 7.

**12.** A molded article comprising the polycarbonate resin composition according to claim 11.

[Figure 1]

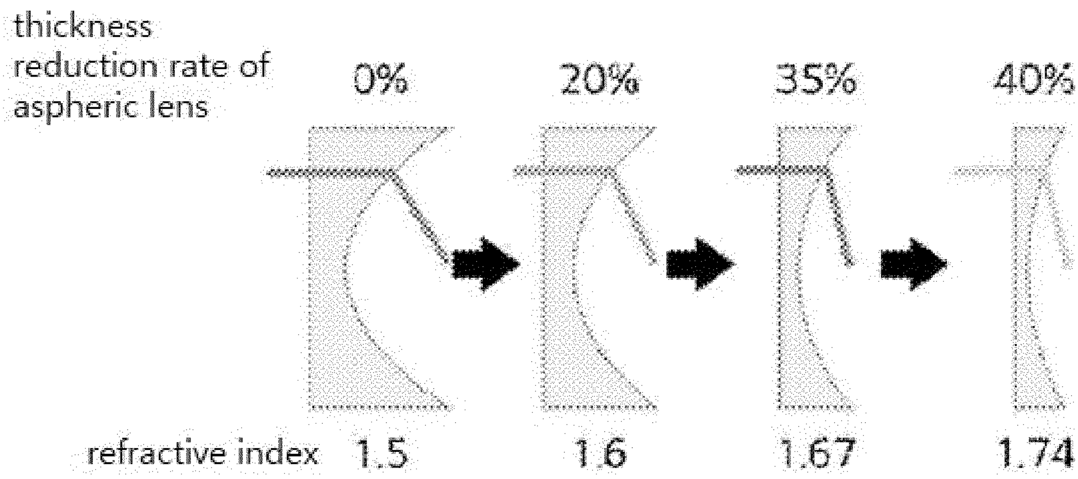
thickness reduction rate of aspheric lens
0%
20%
35%
40%
refractive index
1.5
1.6
1.67
1.74

**INTERNATIONAL SEARCH REPORT**

International application No. **PCT/KR2022/013213**

**A. CLASSIFICATION OF SUBJECT MATTER**

**C08G 64/16**(2006.01)i; **C08G 64/30**(2006.01)i; **C08L 69/00**(2006.01)i; **G02B 1/04**(2006.01)i

According to International Patent Classification (IPC) or to both national classification and IPC

**B. FIELDS SEARCHED**

Minimum documentation searched (classification system followed by classification symbols)

C08G 64/16(2006.01); C07C 43/295(2006.01); C08G 63/672(2006.01); C08G 64/02(2006.01); C08G 64/04(2006.01); C08G 64/06(2006.01); C08G 65/04(2006.01); C09K 19/02(2006.01); C09K 19/04(2006.01); G02B 1/04(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus), Google & keywords: 페닐렌(phenylene), 폴리카보네이트(polycarbonate), 유리전이온도(Tg, glass transition temperature), 굴절률(index of refraction)

**C. DOCUMENTS CONSIDERED TO BE RELEVANT**

| Category* | Citation of document, with indication, where appropriate, of the relevant passages | Relevant to claim No. |
|---|---|---|
| A | JP 2013-001868 A (TEIJIN CHEM. LTD.) 07 January 2013 (2013-01-07)<br>See claims 1 and 8. | 1-12 |
| A | US 2020-0299578 A1 (JNC CORPORATION et al.) 24 September 2020 (2020-09-24)<br>See claims 1-15. | 1-12 |
| A | KR 10-2020-0138182 A (MITSUBISHI GAS CHEMICAL COMPANY, INC.) 09 December 2020 (2020-12-09)<br>See claims 1-14. | 1-12 |
| A | KR 10-2020-0031469 A (LG CHEM, LTD.) 24 March 2020 (2020-03-24)<br>See claims 1-17. | 1-12 |
| A | KR 10-2020-0088490 A (TEIJIN LIMITED) 22 July 2020 (2020-07-22)<br>See claims 1-15. | 1-12 |

☐ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **15 December 2022** | **15 December 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2022/013213**

| Patent document cited in search report | Publication date (day/month/year) | Patent family member(s) | Publication date (day/month/year) |
|---|---|---|---|
| JP 2013-001868 A | 07 January 2013 | JP 5808960 B2 | 10 November 2015 |
| US 2020-0299578 A1 | 24 September 2020 | CN 111465592 A | 28 July 2020 |
| | | EP 3725764 A1 | 21 October 2020 |
| | | JP 7160050 B2 | 25 October 2022 |
| | | TW 201928020 A | 16 July 2019 |
| | | TW I754784 B | 11 February 2022 |
| KR 10-2020-0138182 A | 09 December 2020 | CN 111902455 A | 06 November 2020 |
| | | CN 111902455 B | 26 April 2022 |
| | | EP 3778698 A1 | 17 February 2021 |
| | | EP 3778698 B1 | 08 September 2021 |
| | | TW 202003629 A | 16 January 2020 |
| | | US 11306180 B2 | 19 April 2022 |
| | | US 2021-0054143 A1 | 25 February 2021 |
| KR 10-2020-0031469 A | 24 March 2020 | CN 112469684 A | 09 March 2021 |
| | | EP 3808726 A1 | 21 April 2021 |
| | | JP 2021-530528 A | 11 November 2021 |
| | | JP 7146059 B2 | 03 October 2022 |
| | | TW 202030173 A | 16 August 2020 |
| | | US 2021-0332185 A1 | 28 October 2021 |
| | | WO 2020-055178 A1 | 19 March 2020 |
| KR 10-2020-0088490 A | 22 July 2020 | CN 111655754 A | 11 September 2020 |
| | | EP 3766913 A1 | 20 January 2021 |
| | | JP 2022-166115 A | 01 November 2022 |
| | | TW 201938635 A | 01 October 2019 |
| | | US 2021-0002420 A1 | 07 January 2021 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020220035975